# EUROPEAN PATENT SPECIFICATION

(11) **EP 1 703 381 B1**
(45) Date of publication and mention of the grant of the patent: **29.05.2013**
(21) Application number: 06111179.5
(22) Date of filing: 15.03.2006
(51) Int. Cl.: G06F 9/44

(54) **Rich data-bound applications**
Reichhaltige datengebundene Anwendungen
Applications riches liées à des données

(30) Priority: 15.03.2005 US 80531
(43) Date of publication of application: 20.09.2006
(73) Proprietor: Microsoft Corporation, Redmond, WA 98052 (US)
(72) Inventor: Gasperini, Alan, Redmond, WA 98052 (US); Stoner, Charles Robert, Redmond, WA 98052 (US); Motter, DoRon, Redmond, WA 98052 (US); Bronskill, John F., Redmond, WA 98052 (US); Gossman, John, Redmond, WA 98052 (US); Cooper, Kenneth Bruce, Bellingham, WA 98229 (US); Roeder, Lutz, Redmond, WA 98052 (US); Mullen, Patrick, Bellevue, WA 98008 (US); Peters, Ted Andrew, Bellingham, WA 98225 (US)
(74) Representative: Grünecker, Kinkeldey, Stockmair & Schwanhäusser

(56) References cited:
- WO-A-2004/107200
- US-A1- 2003 035 003
- US-B1- 6 330 006

## Description

### CROSS-REFERENCE TO RELATED APPLICATIONS

The application is related to Patent Application No. 10/823,461 (MSFT-3489/307340.1) entitled "PRIORITY BINDING", filed herewith and to Patent Application No. 10/822,910 (MSFT-3490/307339.1) entitled "DATA-BINDING MECHANISM TO PERFORM COMMAND BINDING", both filed April 13, 2004 and commonly-assigned.

### FIELD OF THE INVENTION

The invention relates to computer processing and to the development and operation of applications with user interfaces.

### BACKGROUND OF THE INVENTION

In order to produce rich client applications with graphical user interfaces (GUIs), both high quality graphic design work and traditional software engineering skills are required. The graphic design work must be done in order to provide the look of the GUI aspect of the applications. The traditional software engineering skills are required in order to provide the functionality of the applications.

Graphic design and software development are two very different disciplines. It is often difficult for graphic designers and software developers to work together productively, making it difficult to produce client applications with both high-quality GUI and high-quality functionality.

Typically, a designer will use a graphics tool such as Photoshop (from Adobe Systems Inc.), Illustrator (also from Adobe Systems Inc.), Flash (from Macromedia Inc.) and Director (also from Macromedia) to create a view of what the UI should look like. This "mock up" is then re-implemented by a developer using a programming tool such as Visual Studio (from Microsoft Corp.) There is typically little reuse of original graphic design elements in the final implementation. Occasionally, some bitmaps and icons from a first application may be reused in a new application, but any prototyped controls and interactivity are unused.

An additional problem with this process is that, parts of the design created by the graphics designer are lost in the process because some effects which are easy to draw are difficult or impossible for the software developer to recreate. One limitation in realizing a designer's vision is that the software developer has limits on what can actually be done using code and current application program interfaces (APIs). Another substantial limitation is that the developer may not fully understand the design and may make choices in the implementation that are different from the designer's intent.

Additionally, the resulting application is not reusable. If the design is modified over time, the designer must redraw the UI with the design tools, and the programmer must rewrite parts of the code to match the design. This may occur at any of multiple levels: from the overall layout of a form or application, to the look of a single control. Generally, the code created in the way described above is difficult to debug, maintain, and extend.

Before the UI can be specified externally, it is necessary to separate the application business logic from the presentation. One approach to separating the two is the Model-View-Controller (MVC) design pattern. MVC attempts to solve this problem by dividing the application into three areas: an abstract model, views of that model, and controllers for each view. The controllers handle input events and translate them into changes to the view or model; conversely the view and controller attach observers to the model so they can update themselves when it changes. For example, for a web client application through which users can search a catalog and see catalog information, the model is where the catalog information is stored. The view is the presentation to the user. The controller handles input events (such as clicks and text from the user) and tells the view and model how to change as a result; the view and controller can also change as a result of changes in the model, changes which the view and controller find out about via observers.

The MVC pattern is conceptually clean. In practice however, it is often difficult to separate the view and controller. Because of this difficulty, the two are usually combined into a single ViewController class which is still a mix of design and logic, and thus, again, difficult for a designer and a developer to collaborate on or for either to solely create. Furthermore, handling events and implementing the observers and update mechanism required to tie together the ViewController and the Model are tedious, code-intensive tasks that are error prone and totally inappropriate for designers. Moreover, the observer and update code are typically similar from one instance to the next.

Thus, as described above, the current developer/designer workflows and application architectures have many inherent problems. In view of the foregoing deficiencies, there is a need for an improved way to create and architect an application or a portion of an application with a user interface (VI) component. The present invention satisfies this need.

WO 2004/107200 A discloses a method and corresponding system for controlling user interface properties with data. An application is separated into two independent parts, a logic portion and a UI portion. The logic portion manipulates data values within the application, while the UI portion is responsible for displaying UI properties. A binding specification describes a relationship between a UI property and a data value by identifying a source data item, a path to the data value in the source data item, a target UI element and the UI property on the target UI element. The mechanism for associating data to the user interface is dynamic, which allows any change in the data to be automatically reflected in the presentation.

US 2003/035003 A1 discloses the binding of web page definitional elements to a back-end state and custom logic. The binding is set between a variable or method declared in a component's script and an attribute of a dynamic definitional element of the component. Each dynamic definitional element has one or more attributes, and each attribute can be bound to a variable or method. Given the definitional element and a variable, a default binding using an attribute of the definitional element is automatically identified. Further, binding can be made between definitional elements and elements of a database. Additionally, dynamic web pages can be generated using data retrieved from a database, while input received from a web page can be stored in a database.

US-B1-6 330 006 discloses a method and apparatus for synchronizing interface objects of an application's graphic user interface with underlying data. A design tool is used to specify an interface object's binding properties, while the data binding properties define an association between an interface object and underlying data for synchronization purposes. In response to a change notification involving a data binding between an interface object and a data source's data item, the binding manager propagates the change between the interface object and the data source.

It is the object of the present invention to provide an improved method for providing functionality via a user interface of an application, as well as a corresponding computer-readable medium and system.

This object is solved by the subject matter of the independent claims.

Preferred embodiments are defined by the dependent claims.

In order to allow for a separation of a view and a model while minimizing the observer and update handling code, data binding is used. A view includes at least one view property which is bound to at least one model property in the model. This binding simplifies the task of meshing a view with a design and automatically performs the functions that event handling, observers, and update mechanisms previously handled.

In some embodiments, a transformer may be used to transform data from the model for use in the view. In some embodiments, portions of the UI resulting from the view may be automatically generated. In some embodiments, command binding may be used to allow commands triggered in the UI to be handled in the model.

Other features and advantages of the invention may become apparent from the following detailed description of the invention and accompanying drawings.

The foregoing summary, as well as the following detailed description of presently preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Figure 1 is a block diagram of an exemplary computing environment in which aspects of the invention may be implemented;

Figure 2 is a block diagram of an application including a UI component according to one embodiment of the invention;

Figure 3 is a depiction of a view which can be used with a model according to one embodiment of the invention;

Figure 4 is a block diagram of portions of an application according to one embodiment of the invention;

Figure 5 is a block diagram illustrating the flow of data between the view, data binding component, and model according to one embodiment of the invention;

Figure 6 is a block diagram depicting the use of command binding according to one embodiment of the invention; and

Figure 7 is a flow diagram of a method for providing functionality to a user via a user interface according to one embodiment of the invention.

### DETAILED DESCRIPTION OF ILLUSTRATIVE EMBODIMENTS

### Exemplary Computing Environment

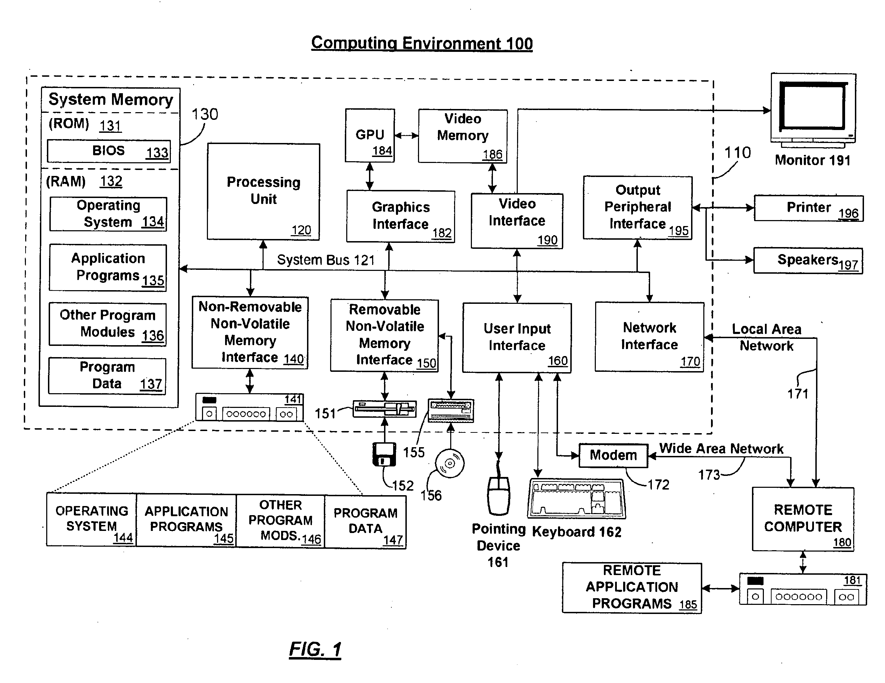

FIG. 1 illustrates an example of a suitable computing system environment 100 in which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

One of ordinary skill in the art can appreciate that a computer or other client or server device can be deployed as part of a computer network, or in a distributed computing environment. In this regard, the present invention pertains to any computer system having any number of memory or storage units, and any number of applications and processes occurring across any number of storage units or volumes, which may be used in connection with the present invention. The present invention may apply to an environment with server computers and client computers deployed in a network environment or distributed computing environment, having remote or local storage. The present invention may also be applied to standalone computing devices, having programming language functionality, interpretation and execution capabilities for generating, receiving and transmitting information in connection with remote or local services.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network or other data transmission medium. In a distributed computing environment, program modules and other data may be located in both local and remote computer storage media including memory storage devices. Distributed computing facilitates sharing of computer resources and services by direct exchange between computing devices and systems. These resources and services include the exchange of information, cache storage, and disk storage for files. Distributed computing takes advantage of network connectivity, allowing clients to leverage their collective power to benefit the entire enterprise. In this regard, a variety of devices may have applications, objects or resources that may utilize the techniques of the present invention.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium that can be used to store the desired information and that can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable, volatile/nonvolatile computer storage media. By way of example only, FIG. 1 illustrates a hard disk drive 140 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

While some exemplary embodiments herein are described in connection with software residing on a computing device, one or more portions of the invention may also be implemented via an operating system, application programming interface (API) or a "middle man" object, a control object, hardware, firmware, etc., such that the methods may be included in, supported in or accessed via all of NET's languages and services, and in other distributed computing frameworks as well.

### Use of a Data Binding Component in Data-Bound Applications

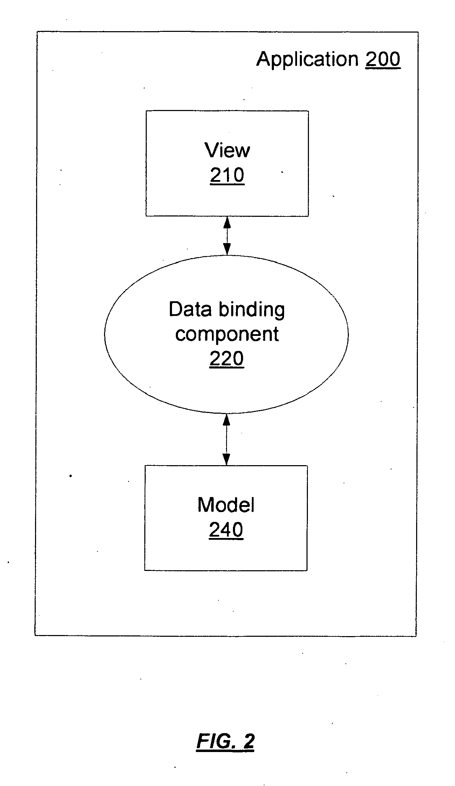

In order to provide for higher productivity, better reusability of application elements, and easier cooperation between developers and designers, the current invention provides a clean separation between the look (or "View") of the user interface (UI) and the underlying behavior (the "Model"). Figure 2 is a block diagram of an application including a UI component according to one embodiment of the invention. As seen in Figure 2, application 200 includes a view 210 and a model 240. These correspond to the view and model in the MVC pattern of architecting applications. The model 240 represents UI-free code for the logic of the application. For example the database and business logic for a catalog would be implemented in model 240. As an additional example, in the case where application 200 enables a user to explore the file system the model 240 for the application in this exemplary case is the file system: the set of folders and files within a selected directory. The model 240 includes both data (such as catalog data) and logic about the data, for example, consistency rules. A consistency rule may require that prices of products in a catalog be non-negative, for example.

By using a model 240, the benefit of having the model defined in a traditional programming language and thus understandable to a software developer are retained. In the file system example, the model consists of methods to move, copy and rename files, create folders and execute application files. Those operations necessarily require business logic specific to the task but independent of the UI used to expose those operations to the end user. The view 210 is specified declaratively. For example, the view 210 may be defined by using a tool such as Microsoft's Visual Studio product or Macromedia Inc.'s Flex product.

In order to provide for the link between the view 210 and the model 240, application 200 uses a general data binding component 220. The general data binding component is shown within application 200, however in some embodiments, it is an available resource used by the application 200. The data binding component 220 in some embodiments is a data binding engine 220. Such a data binding engine enables dynamic bindings between properties on pairs of objects, such as an association between a property on the model and a property on the view. The data binding engine 220 listens to property change notifications on those objects so changes to the source property will automatically reflect on the target property and vice versa. The data binding engine may support the evaluation of property paths to enable the binding of specific parts of the target to specific parts of the source. In some embodiments of the invention, binding target object properties to source object properties may be done declaratively in a markup language such as HTML (HyperText Markup Language), XML (eXtensible Markup Language), XAML (eXtensible Application Markup Language) or other suitable markup language.

The data binding engine 220 therefore functions as an intermediary between the view 210 and the model 240. Therefore by using a data binding engine, applications may be architected with the user interface constructed separately from a model without requiring the application code to explicitly handle events from the view 210 and implement the observers and update mechanism on the model 240. The data binding engine 220 synchronizes its source and target automatically. Thus appropriate updating occurs when user input to the view 210 or a change in the model 240 occurs.

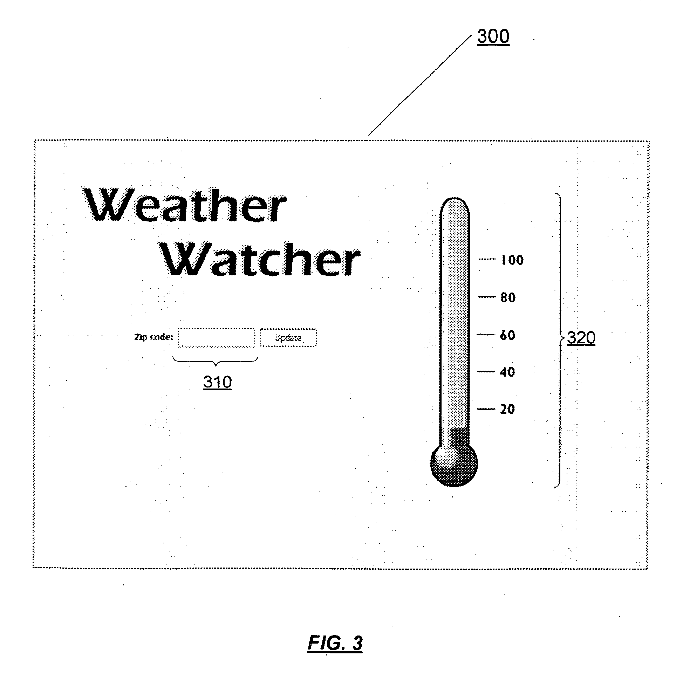

As an example, application 200 may be a simple application which displays the temperature. The view 210 can be authored by a graphic designer in a graphics tool. For example, a simple view is depicted in Figure 3. As shown in Figure 3, a graphic 300 includes a text box 310 and a thermometer graphic 320. In the example, application 200 is meant to allow a user to enter a zip code into text box 310 and to display the corresponding temperature in that zip code in thermometer graphic 320. The reading on the thermometer is set by the graphic designer to correspond to a variable "Length" associated with the graphic 300. The data from text entry box is associated with a variable "zipcode". In one variation of this example, in order to retrieve the correct temperature for a zipcode, a database is consulted. The database stores, for each zipcode, the length to display for the thermometer graphic 320. The data binding engine 220 binds the zipcode and Length for the graphic 300 with that in the database, and the database, for the thermometer application of Figure 3, is the model 240.

### Use of a Data Binding Component and an Adapter Layer

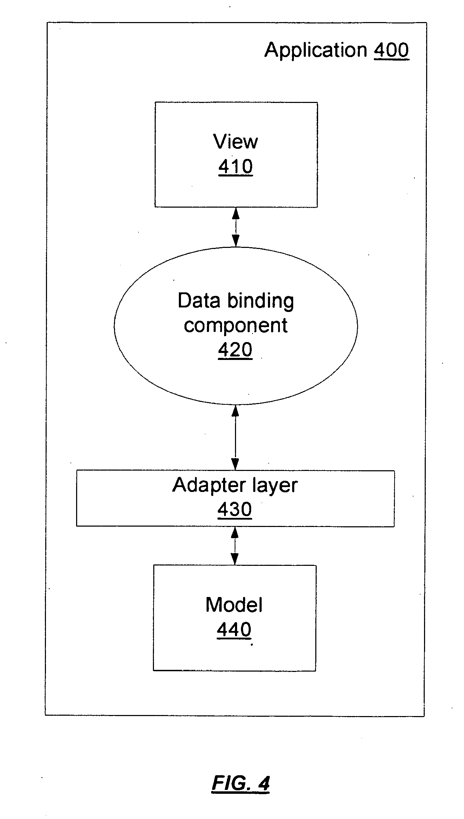

Figure 4 is a block diagram of the portions of an application according to one embodiment of the invention. Figure 4 shows an application 400 with view 410, data binding component 420, and model 440. The view 410, data binding component 420 and model 440 are as described above with reference to corresponding elements of Figure 2. However, Figure 4 also includes an adapter layer 430 which performs any necessary conversions of concepts in the view 410 to/from those in the model 440.

For example, in another variation of the thermometer application example, the model 440 for the thermometer application depicted in Figure 3 is implemented by a service available over the World Wide Web. The web service could be exposed in the application by a model 440 as in the following example, in which TemperatureModel is a model as described:

```
    public class TemperatureModel
     {
        private string zipcode;
        public event PropertyChangedEventHandler PropertyChanged;
        public double Temperature
               get { return webservice.get_temp(zipcode); }
       public string ZipCode
               get { return zipcode; }
               set
                       zipcode = value;
                       if (PropertyChanged != null)
                              PropertyChanged(this, "ZipCode");
                              PropertyChanged(this, "Temperature");
    }
```

As provided, the webservice returns a floating point number corresponding to the temperature in degrees rather than a Length value which could be used directly in the view 410. In such a case, the adapter layer 430 would convert this floating point number to a length which can be used in the view 410. While the data binding component 420 may work directly against the web service, for example, via a wrapper which allows access to the service over the Internet, the result provided by the service is not understandable to the view 410, which requires a length, not a temperature in degrees. Thus, the adapter layer 430 provides a conversion. An example of the adapter layer 430 for the web-based thermometer application example is:

```
    public class TemperatureConverter
     {
        public object Convert(object temperature)
       {
                return new Length((double) temperature) * 2.5);
       }
     }
```

This adapter layer 430 allows the Length to be determined from the temperature returned from the web service. The temperature is obtained from a webservice, a client-side script to invoke remote methods exposed via the World Wide Web ("webservice. get_temp (zipcode) ") from the Temperature property on the model 440. Length is based on the obtained temperature. A data binding component 420 would then bind zipcode of the view 410 to zipcode in the model 440 and Length of the view 410 to Length in the model 440 through the adapter layer 430. The binding declaration for the Length in the view 410 would refer to both the Temperature in the model 440 and the converter in the adapter layer 430. When a new zipcode is entered in the view 410, the data binding component would update the ZipCode property in the model 440. Consequently, the model would notify listeners that both the ZipCode and Temperature properties in the model have changed. The data binding component would then calculate a new Length using model 440 (the web service) to obtain the updated temperature value and then applying the conversion in adapter layer 430. The resulting Length value would be supplied to the view 410.

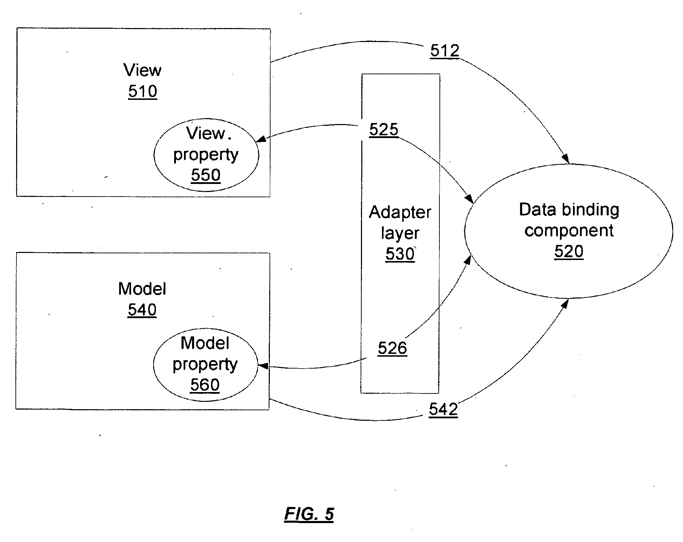

Figure 5 is a block diagram illustrating the flow of data between the view, data binding component, and the model according to one embodiment of the invention. The data binding component 520 listens for property change notifications from the view 510, as shown by arrow 512. Additionally, the data binding component 520 listens for property change notifications from the model 540, as shown by arrow 542. If a change notification is received, the data binding component 520 will synchronize the view property 550 in the view 510 with the model property 560 in the model 540, as shown by arrows 525 and 526. Where an adapter layer 530 is present, adapter layer 530 enables this synchronization where properties do not directly correspond, as described above.

### Transformers, Automatically Generated UI, and Command Binding

With reference again to Figure 2, as described above, the adapter layer allows for transformers so that a property in the view 210 can correspond with a property in the model 240. Transformers are objects that transform a specific class of data from one set of values to another. Transformers can work in one direction or in both directions. Thus, in the thermometer example, a transformer was supplied to transform the result retrieved from the web service into a Length. This transformation was unidirectional, as it did not need to be converted back into a temperature value and only a unidirectional transformer was needed. However, there may be instances where bi-directional transformers are required. For example, imagine if a map of the United States had also appeared on the graphic 300 from Figure 3, and a point on the map could be selected by a user instead of typing in a zip code into text box 310. In such a case, the property in the view 210 which holds the location of a click would be transformed into a property in the model 240 identifying a zip code. This zip code is then used to change the value displayed in the text box 310 and the value displayed on the thermometer graphic 320 via additional transformations.

Transformers allow the UI to expose the data in different formats while allowing the model 240 to expose the data in a single, consistent format. They also allow the same data on the model 240 to be displayed in several different ways simultaneously without forcing the model 240 to expose redundant information. In addition to binding properties to UI components, data binding also provides the powerful capability to automatically generate content for the user interface based on the model 240. For example, the model 240 may expose a property which is a collection of data. The view can declaratively specify that a new user interface components be created in the view for each item in the model collection. The collection on the view side is then bound with the property on the model which is a collection of data. This binding thus causes automatic generation of the user interface components in the UI. Thus, for example, a list of names in the model may result in a menu with each name listed in the UI. The view 210 need not know how many elements are in the list of names, the list with the correct number is automatically generated based on the binding. Different UI elements can be created this way, including by populating items of a menu, populating list views, and populating combo-boxes.

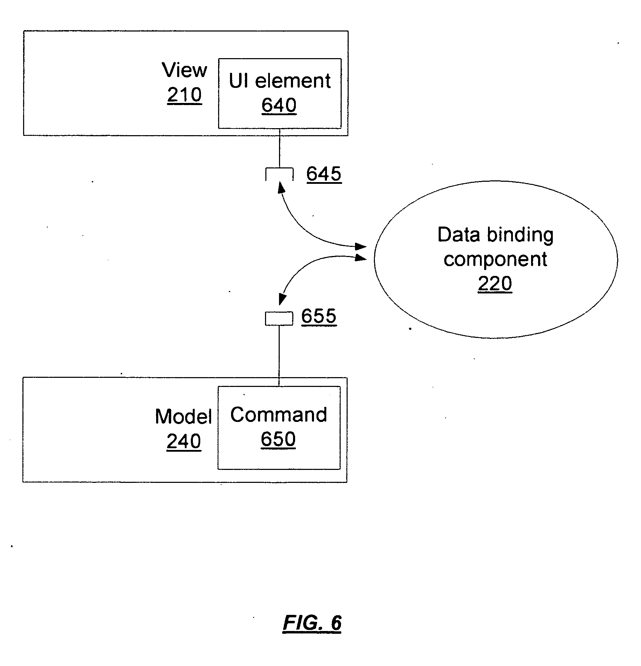

Command binding is used to bind an operation in a model to a UI element. Figure 6 is a block diagram depicting the use of command binding according to one embodiment of the invention. In the view 210, a UI element 640 (for example a menu item) will expose a property 645. The property 645 acts as a sink (target) during data-binding. For example, UI element 640 may be a Delete Button in the file system example and property 645 is the command property tied to the corresponding model command to delete the selected files. Tying functionality of a command to the property 645 can be achieved by assigning the model 240 as a data source and data-binding the property 645 on the UI element 640 to a command property 655 of command 650 on the model. Thus, functionality of a command in the view 210 can be achieved declaratively without involving any imperative program code. The Button UI element in the example is responsible for simply invoking the associated command when the Button is pressed, regardless of what that command might be.

A declarative binding may be achieved in some embodiments using a property path first addressing the active document in a model 240 and then selecting an editing command on the active document with that property path specified in the command property 645 of a button on a user interface 640.

### Method for Providing Functionality to a User According to the Invention

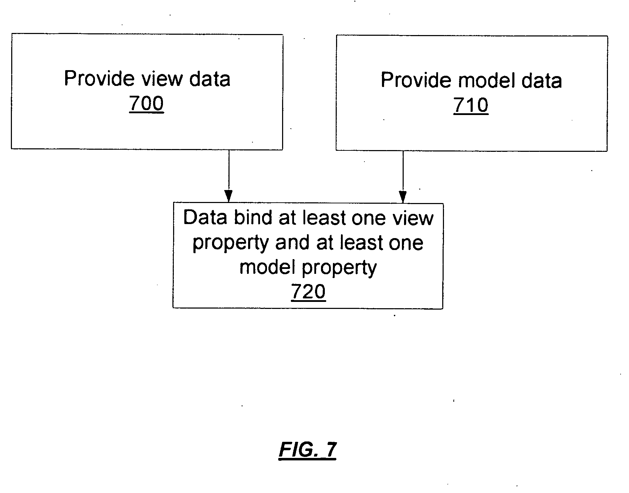

Figure 7 is a flow diagram of a method for providing functionality to a user via a user interface according to one embodiment of the invention. Such functionality can provide a rich, data-bound application. In step 700, view data is provided which describes a user interface. The view data comprises at least one view property. Additionally, in step 710, model data effectuating the functionality is provided. This model data may effectuate the functionality either by providing data for it (e.g. from a database or other data store) or by providing programmatic functionality. In step 720, at least one of the view properties is bound to at least one of the model properties. In some embodiments of the inventions, this is done by means of a data binding engine. Step 720 may be accomplished via a transformation of the model property into a view-compliant property, which is then bound to the model property. Additionally, step 720 may be accomplished via a transformation of the view property into a model-compliant property, which is bound to the view property. Automatic generation ofUI elements for the view and command-binding can be accomplished through the binding step 720.

Creation of an application from view data by providing model data and binding some model data properties to view data properties is possible, as is creation of an application from model data by providing view data and binding.

### Conclusion

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the creation and/or implementation of domain-specific programming models aspects of the present invention, e.g., through the use of a data processing API or the like, are preferably implemented in a high level procedural or object oriented programming language to communicate with a computer system. However, the program(s) can be implemented in assembly or machine language, if desired. In any case, the language may be a compiled or interpreted language, and combined with hardware implementations.

## Claims

1. A method for providing functionality via a user interface of an application (400), said method comprising:
providing view data (700) describing a user interface, said view data comprising at least one view property (550);
providing model data (710) effectuating said functionality, said model data comprising at least one model property (560); and
binding at least one of said view properties to at least one of said model properties, wherein said binding comprises:
providing an adapter layer (530) located within the application to perform a transformation of said model property, said transformation resulting in a view-compliant model property, and
binding said view-compliant model property to said model property.

2. The method of claim 1, where said binding comprises binding using a data binding engine.

3. The method of claim 1, where said view data describes a presentation of user interface elements based on at least one specific view property, where said specific view property is bound to at least one specific model property, and where said binding allows said presentation to automatically generate said user interface elements based on said at least one model property.

4. The method of claim 3, where said automatic generation comprises one or more selected from among the following: populating items of a menu, populating list views, populating combo-boxes.

5. The method of claim 1, where said model property is a command.

6. The method of any one of claims 1 to 5, the method further for creating the application from the view data.

7. A computer-readable medium comprising computer-executable instructions for performing the method of any one of claims 1 to 6.

8. A system for providing an application (400) with a user interface, said system comprising:
a view (510) comprising view data describing a user interface, said view data comprising at least one view property (550);
a model (540) comprising model data effectuating said functionality, said model data comprising at least one model property (560);
an adapter layer (530) within the application to perform a transformation of said model property, said transformation resulting in a view-compliant model property; and
a data binding component (520) binding at least one of said view properties to at least one of said model properties by binding said view-compliant model property to said model property.

9. The system of claim 8, where said binding uses a data binding engine.

10. The system of claim 8, where said view data describes a presentation of user interface elements based on at least one specific view property, where said specific view property is bound to at least one specific model property, and where said binding allows said presentation to automatically generate said user interface elements based on said at least one model property.

11. The system of claim 10, where said automatic generation comprises one or more selected from among the following: populating items of a menu, populating list views, populating combo-boxes.

12. The system of claim 8, where said model property is a command.

## Patentansprüche

1. Verfahren zum Vorsehen einer Funktionalität über eine Benutzeroberfläche einer Anwendung (400), wobei das Verfahren umfasst:
Vorsehen von Ansichtsdaten (700), die eine Benutzeroberfläche beschreiben, wobei die Ansichtsdaten wenigstens eine Ansichtseigenschaft (550) umfassen,
Vorsehen von Modelldaten (710) zum Bewerkstelligen der Funktionalität, wobei die Modelldaten wenigstens eine Modelleigenschaft (560) umfassen, und
Binden wenigstens einer der Ansichtseigenschaften an wenigstens eine der Modelleigenschaften, wobei das Binden umfasst:
Vorsehen einer Adapterschicht (530) in der Anwendung zum Durchführen einer Transformation der Modelleigenschaft, wobei die Transformation in einer Ansichts-konformen Modelleigenschaft resultiert, und
Binden der Ansichts-konformen Modelleigenschaft an die Modelleigenschaft.

2. Verfahren nach Anspruch 1, wobei das Binden ein Binden unter Verwendung einer Datenbindungsengine umfasst.

3. Verfahren nach Anspruch 1, wobei die Ansichtsdaten eine Präsentation von Benutzeroberflächenelementen auf der Basis wenigstens einer spezifischen Ansichtseigenschaft beschreiben, wobei die spezifische Ansichtseigenschaft an wenigstens eine spezifische Modelleigenschaft gebunden ist und wobei das Binden gestattet, dass die Präsentation die Benutzeroberflächenelemente automatisch auf der Basis der wenigstens einen Modelleigenschaft erzeugt.

4. Verfahren nach Anspruch 3, wobei die automatische Erzeugung eines oder mehrere der folgenden umfasst: Füllen von Elementen eines Menüs, Füllen von Listenansichten, Füllen von Comboboxen.

5. Verfahren nach Anspruch 1, wobei die Modelleigenschaft ein Befehl ist.

6. Verfahren nach einem der Ansprüche 1 bis 5, wobei das Verfahren weiterhin das Erstellen der Anwendung aus den Ansichtsdaten umfasst.

7. Computerlesbares Medium mit computerausführbaren Befehlen zum Durchführen des Verfahrens nach einem der Ansprüche 1 bis 6.

8. System zum Vorsehen einer Anwendung (400) mit einer Benutzeroberfläche, wobei das System umfasst:
eine Ansicht (510), die Ansichtsdaten umfasst, die eine Benutzeroberfläche beschreiben, wobei die Ansichtsdaten wenigstens eine Ansichtseigenschaft (550) umfassen,
ein Modell (540), das Modelldaten zum Bewerkstelligen der Funktionalität umfasst, wobei die Modelldaten wenigstens eine Modelleigenschaft umfassen,
eine Adapterschicht (530) in der Anwendung zum Durchführen einer Transformation der Modelleigenschaft, wobei die Transformation in einer Ansichts-konformen Modelleigenschaft resultiert, und
eine Datenbindungskomponente (520), die wenigstens eine der Ansichtseigenschaften an wenigstens eine der Modelleigenschaften bindet, indem sie die Ansichts-konforme Modelleigenschaft an die Modelleigenschaft bindet.

9. System nach Anspruch 8, wobei das Binden eine Datenbindungsengine verwendet.

10. System nach Anspruch 8, wobei die Ansichtsdaten eine Präsentation von Benutzeroberflächenelementen auf der Basis wenigstens einer spezifischen Ansichtseigenschaft beschreiben, wobei die spezifische Ansichtseigenschaft an wenigstens eine spezifische Modelleigenschaft gebunden ist und wobei das Binden gestattet, dass die Präsentation die Benutzeroberflächenelemente automatisch auf der Basis der wenigstens einen Modelleigenschaft erzeugt.

11. System nach Anspruch 10, wobei die automatische Erzeugung eines oder mehrere der folgenden umfasst: Füllen von Elementen eines Menüs, Füllen von Listenansichten, Füllen von Comboboxen.

12. System nach Anspruch 8, wobei die Modelleigenschaft ein Befehl ist.

## Revendications

1. Procédé pour fournir des fonctionnalités via une interface utilisateur d'une application (400), ledit procédé comprenant les étapes consistant à :
- prévoir des données de vue (700) décrivant une interface utilisateur, lesdites données de vue comprenant au moins une propriété de vue (550) ;
- prévoir des données de modèle (710) effectuant ladite fonctionnalité, lesdites données de modèle comprenant au moins une propriété de modèle (560) ; et
- lier au moins une desdites propriétés de vue à au moins une desdites propriétés de modèle, pour lequel ladite liaison comprend :
- prévoir une couche d'adaptateur (530) située dans l'application pour effectuer une transformation de ladite propriété de modèle, ladite transformation ayant pour résultat une propriété de modèle conforme à la vue, et
- lier ladite propriété de modèle conforme à la vue à ladite propriété de modèle.

2. Procédé selon la revendication 1, pour lequel ladite liaison comprend une liaison utilisant un moteur de liaison de données.

3. Procédé selon la revendication 1, pour lequel lesdites données de vue décrivent une présentation d'éléments d'interface utilisateur fondés sur au moins une propriété de vue spécifique, pour lequel ladite propriété de vue spécifique est liée à au moins une propriété de modèle spécifique et pour lequel ladite liaison permet à ladite présentation de générer automatiquement lesdites éléments d'interface utilisateur fondés sur ladite au moins une propriété de modèle.

4. Procédé selon la revendication 3, pour lequel ladite génération automatique comprend un ou plusieurs éléments sélectionnés parmi les éléments suivants :
remplir les articles d'un menu, remplir des vues de liste, remplir des listes déroulantes.

5. Procédé selon la revendication 1, pour lequel ladite propriété de modèle est une commande.

6. Procédé selon l'une quelconque des revendications 1 à 5, le procédé en outre servant à créer l'application à partir des données de vue.

7. Support lisible par ordinateur comprenant des instructions exécutables par ordinateur pour mettre en oeuvre le procédé selon l'une quelconque des revendications 1 à 6.

8. Système pour doter une application (400) d'une interface utilisateur, ledit système comprenant :
- une vue (510) comprenant des données de vue décrivant une interface utilisateur, lesdites données de vue comprenant au moins une propriété de vue (550) ;
- un modèle (540) comprenant des données de modèle effectuant ladite fonctionnalité, lesdites données de modèle comprenant au moins une propriété de modèle (560) ;
- une couche d'adaptateur (530) dans l'application pour effectuer une transformation de ladite propriété de modèle, ladite transformation ayant pour résultat une propriété de modèle conforme à la vue ; et
- un composant de liaison de données (520) liant au moins une desdites propriétés de vue à au moins une desdites propriétés de modèle en liant ladite propriété de modèle conforme à la vue à ladite propriété de modèle.

9. Système selon la revendication 8, dans lequel ladite liaison utilise un moteur de liaison de données.

10. Système selon la revendication 8, dans lequel lesdites données de vue décrivent une présentation d'éléments d'interface utilisateur fondés sur au moins une propriété de vue spécifique, dans lequel ladite propriété de vue spécifique est liée à au moins une propriété de modèle spécifique et dans lequel ladite liaison permet à ladite présentation de générer automatiquement lesdites éléments d'interface utilisateur fondés sur ladite au moins une propriété de modèle.

11. Système selon la revendication 10, dans lequel ladite génération automatique comprend un ou plusieurs éléments sélectionnés parmi les éléments suivants :
remplir les articles d'un menu, remplir des vues de liste, remplir des listes déroulantes.

12. Système selon la revendication 8, dans lequel ladite propriété de modèle est une commande.
